# EUROPEAN PATENT SPECIFICATION

(11) **EP 3 160 155 B1**
(45) Date of publication and mention of the grant of the patent: **12.12.2018**
(21) Application number: 15191033.8
(22) Date of filing: 22.10.2015
(51) Int. Cl.: H04N 21/458, H04N 21/414, H04N 21/462, G06F 17/30, H04N 21/442, H04N 21/45, H04N 21/81

(54) **METHOD OF PROVIDING A MEDIA PROGRAM TO A VEHICLE REPRODUCTION SYSTEM AND VEHICLE MEDIA PROGRAM PROCESSING SYSTEM**
VERFAHREN ZUR BEREITSTELLUNG EINES MEDIENPROGRAMMS AN EIN FAHRZEUGWIEDERGABESYSTEM UND FAHRZEUGMEDIENPROGRAMMVERARBEITUNGSSYSTEM
PROCÉDÉ DE FOURNITURE D'UN PROGRAMME MULTIMÉDIA À UN SYSTÈME DE REPRODUCTION DE VÉHICULE ET SYSTÈME DE TRAITEMENT DE PROGRAMME MULTIMÉDIA DE VÉHICULE

(43) Date of publication of application: 26.04.2017
(73) Proprietor: Alpine Electronics, Inc., Tokyo (JP)
(72) Inventor: KUEPER, Thorsten, 70567 Stuttgart (DE)
(74) Representative: Schmitt-Nilson Schraud Waibel Wohlfrom Patentanwälte Partnerschaft mbB

(56) References cited:
- GB-A- 2 366 055
- US-A1- 2006 059 535
- US-A1- 2012 002 515

## Description

The present invention is related to a method of providing a media program to a vehicle reproduction system and a corresponding vehicle media program processing system.

More particularly, the present application is related to the processing of data, more particularly audio data, and the transmittal of such data to vehicle reproduction systems. The media program or the vehicle reproduction system may relate to car infotainment systems, for example. In today's in-car infotainment systems the user or driver has a broad choice of different entertainment sources, such as Radio, USB-media, HDD-media, Streaming Services, Podcasts. The user is able to switch between this media sources at any time by using the controls in the infotainment system, such as a HMI (human-machine interface).

Many users switch media sources frequently during their daily drives because they want to receive information/entertainment from different media sources. For example a user may desire to listen to the latest news on his preferred radio station. Then, he may like to switch to a specific podcast and afterwards to a hard disc drive (HDD) in order to listen to music, for example.

As a drawback of today's technology, the user has to frequently and manually switch between the media sources in order to compile his personal media program. As the order or availability of the media contents switches or varies every day, the user or driver has to compile his media program or switch between different media contents or media sources every day again. Depending on the HMI this process is time consuming and in worst case distracting the driver and thereby affecting the driving task, as the user may have to take care that he is not missing some media content which may currently be broadcast at a specific time e.g. the news in the radio. These drawbacks are even more present in an automotive environment, such as in a vehicle, particularly a car, where the driver has typically only limited time and attention available for searching of appropriate broadcast stations without compromising driving safety.

US 2006/059535 A1 discloses a receiver and method for playing content such as in an automobile and/or wireless communication device which is configured for playing of live and recorded multi media content. A desired genre of content is first defined and both recorded and live content of that desired genre is identified and assembled into a playlist. Live content that is near a beginning of its being played can be rotated to a top of a playlist. In this way, live content which a user may not have heard is given a priority of recorded content of the user. A control interface is provided to assist in presenting content from multiple sources, a multimedia play list is utlilized to manage different sources. Content on the playlist is played sequentially in order or played in a randomized sequence. Special consideration and priorities are given to live broadcast material.

US 2012/002515 A1 discloses media content playback which includes providing a plurality of media contents, providing for each of the media contents information identifying the respective media content, receiving from a user selection instructions that effect selecting or deselecting of a specific media content, providing context data based on measurements of at least one of absolute time, absolute position and of at least one physical quantity at or in the vicinity of the location where the selected media content is to be reproduced, providing or adapting a user profile that assigns for each specific media content user instructions to the context data provided at the time of receipt of the respective instruction, and selecting according to the user profile one of the media contents dependent on the context data at the time of selection.

GB 2 366 055 A discloses an in-car entertainment system which comprises a wireless device able to receive entertainment data from a server connected to the Internet and to transmit data to the Internet, and electronic storage means for storing a user's personal entertainment preferences. A central processing unit is configured to receive data from the Internet via the wireless device and to process said data through a decoder to produce digital entertainment signals.

US 2005/0210528 A1 discloses a controller with program schedules associated with clients. Each of the program schedules includes a plurality of programs each associated with a different reproduction time slot and including a list of music data to be reproduced in that reproduction time slot. The audio clients are instructed to reproduce the music data according to the program schedules. In response to the instruction, the audio clients request content items. In response to the request, the server distributes content items to the audio clients. Each of the clients reproduces music pieces based on the music data distributed from the server.

It is an object of the present invention to provide a method of providing a media program to a vehicle reproduction system and a vehicle media program processing system being capable of reducing the drawbacks described above with respect to distraction of the driver which compromises driving safety.

This object is achieved by the subject-matter of the independent claims. Advantageous embodiments are defined in the dependent claims.

According to an aspect of the invention, there is provided a method of providing a media program to a vehicle reproduction system comprising the steps of providing a preference instruction or a preference information for the media program to a processing device. The processing device can be a processor or a microprocessor, for example. The media program comprises at least two media contents to be processed by the processing device. Preferably, the media program consists of or is related to audio media contents to be reproduced in a vehicle reproduction system. The media program preferably comprise a plurality of media contents of various media sources and sub sources or classes. The preference instruction or respective information for the media program may, therefore, be stored in a storage unit or device which may be part of the processing device or may be stored in a data base, for instance. The method further comprises establishing a preference order of the at least two media contents out of the preference instruction. Expediently, the preference order is determined by the preference instruction which can be a user-defined instruction or information. The establishing of the preference order may as well relate to a pre-processing of the media program. Additionally or alternatively, the preference order may be established at least in parts in an arbitrary fashion, e.g. by an input unit (see below). The method further comprises processing the media program according to the preference order, wherein the processing device evaluates whether a preferential media content of the at least two media contents is available. An availability may in this context as well relate to operability or accessibility of media contents, e.g. of a particular radio station which may be inhibited or negatively affected by disturbance in radio reception or disturbance of web access in case of a web-based media content for example. If, the preferential media content is available, the method comprises executing the preferential media content as part of a media program, and, if the preferential media content is not available, the method comprises updating the preference order of the at least two media contents, expediently by the processing device, and repeating the processing with a media content subordinate to the preferential media content. Said execution may as well relate to a transmittal of the media program or a single media content thereof to the vehicle reproduction system, e. g. of a vehicle such as a car. Thereby, the subordinate media content is expediently ranked directly below the preferential media content. In this sense, the media program may be composed of a multitude of media contents rendered or executed by the processing device, wherein it is complied with the preference instruction.

According to another aspect of the invention, there is provided a vehicle media program processing system comprising the processing device being configured to receive data associated with the preference order for the media program to be reproduced in a vehicle reproduction system. Preferably, the media program comprises at least two media contents, wherein the processing device is configured to process the media program according to the preference order and to evaluate whether a preferential media content of the at least two media contents is available, wherein, if the preferential media content is available the preferential media content is executed or rendered as part of the media program. If a preferential media content is not available, the preference order of the at least two media contents is updated and the processing is repeated with the media content subordinate to the preferential media content. The vehicle media program processing system further comprises an output unit being configured to receive data from a processing device and to couple output data to a vehicle reproduction system to reproduce the media program.

According to another aspect, the invention relates to a vehicle reproduction system comprising the vehicle media program processing system.

According to still another aspect, the invention relates to a vehicle comprising the vehicle media program processing system, e.g. implemented in the vehicle reproduction system.

A difference between the present invention and state of the art implementations is that today's solutions are based on a strict time table while with the present invention it is achieved to define or provide for a dynamically established media program being customized to the users preferences.

As an advantage of the present invention over the mentioned issue of manual switching of media sources, the user can create his personal infotainment or media program for a specific time or driving time of the day without the necessity of over and over switching the media sources, as the media program can be "automatically" switched between the different media sources. Further, user or driver distraction during driving of a vehicle, such as a car, can be reduced or minimised as the vehicle media program processing system and the presented method dynamically and/or autonomously or partially autonomously provide for a media program, e. g. composed of audio contents, the user can listen to during the journey without the need of driver or user interaction. Thus, the user can concentrate on his driving task while the vehicle media program processing system adopts, e. g. the switching of media sources for him. At the same time, by means of the provided preference instruction, which is preferably carried out prior to the respective journey, it is advantageously accounted for the individual driver preferences, e. g. in terms of taste of music or further demands. Further decisions or information, e.g. which type of radio station or media is to be executed and/or reproduced in the vehicle may then be adopted by the vehicle media program processing system and the described method. Various (different) media programs customised to user preference can be processed by the method described herein.

For example, the media program is, expediently and advantageously processed or compiled in a real-time manner always taking into account the availability of the respective media contents such as a particular radio station, for example.

In an embodiment, available media contents which are not affected by the preference instruction, are executed or rendered in a shuffle or arbitrary mode by the processing device. As an advantage thereof, e. g. only a music genre or class of media contents can be determined by the user via the preference instruction in a previous step and the presented system autonomously renders and reproduces the media contents according to the users preferences.

In an embodiment, the preference instruction is user-defined.

In an embodiment, the preference instruction comprises information about media sources used for the at least two media contents. Additionally or alternatively, the preference instruction may be related to different types of preferences, e. g. a desired time distribution of different media contents such as news and music.

In an embodiment, at least one of the media sources is selected from at least one of broadcasting service, hard disc drive media (HDD-media), streaming services and the Internet. For the source of broadcasting services, radio broadcasting, news or e. g. music can be selected. HDD-media may, in turn, relate to any PC, laptop, smart phone, or media from USB devices, such as devices that can be connected to a car HMI via USB connection. Moreover, e.g. for executing and reproducing podcasts, the Internet and streaming services can be conducted. A preference of the user may e. g. be related to the reproduction of a podcast only if a new episode thereof is available at the actual date and time.

In an embodiment, the preference instruction comprises information about sub-classes, such as different radio stations for example within one media source.

In an embodiment, in accordance with a preference instruction, the processing is performed such that, as a preferential media content, news from a broadcasting service are executed and, as a first subordinate media content, a podcast from the internet is executed and, as a second subordinate media content, music from a broadcasting service is executed. This embodiment may relate to an expedient example of a sequence of media contents in the media program which the user of the system or a driver of a vehicle may desire to listen to during his journey.

In an embodiment, in accordance with the preference instruction, the processing is performed such that media contents which are to be reproduced directly after one another in the media program have different category chosen from at least one of music and non musical contributions. According to this embodiment, a desired variety of media contents may be executed and/or reproduced.

In an embodiment, in accordance with the preference instruction, the processing is performed such that between media contents of non musical categories which are to be reproduced successively, at least a pre-set period of time of media content of musical category is executed. With this embodiment, as well, an individual user preference may be realised, wherein media contents which require a certain attention from the user or driver may be alternated by musical contributions, for example. Said pre-set period of time may e. g. amount to 20 minutes.

In an embodiment, in accordance with a preference instruction, availability of a media content is denied by the processing device when that media content, e. g. of a broadcasting service, can not be reproduced from its beginning as the processing of the media program has only been started after the point of time of the beginning of the respective media content. With this embodiment, it may e.g. be avoided that a news content or any other audio contribution is executed when the same content can generally not be reproduced as a whole, e. g. in terms of to the duration of the journey of the user or driver.

In an embodiment, in accordance with the preference instruction, availability of a media content is denied by the processing device when the media content, e. g. of a broadcasting service can not be reproduced till or until its end, as the processing of the media program is stopped or will be stopped at the point of time prior to the end of the respective media content. With this embodiment, it may e. g. be avoided that a news content or any other audio contribution is executed when the same content can generally not be reproduced as a whole, e. g. in terms of to the duration of the journey of the user or driver.

In an embodiment, the system further comprises an input unit being configured to receive a preference instruction of the at least two media contents and to establish the preference order out of the preference instruction. Thereby, advantageously, the establishing of the preference order can be performed by a further instance or unit apart from the preference device, for example.

In an embodiment, the input unit is implemented as an on-board unit, e. g. in an infotainment and/or HMI-system, of a vehicle comprising the vehicle reproduction system. Thereby, the user or driver can enter e. g. the preference instructions directly into the vehicle reproduction system after or before a journey.

In an embodiment, the input unit is implemented as an off-board unit, particularly in a remote terminal, such as a laptop, PC or smart phone via a web portal or web server. Thereby, the user or driver can enter e. g. the preference instructions in a comfortable way at home or anywhere else e. g. after or before a journey. According to the mentioned embodiments, the input unit may be implemented to be wired to the processing device or be implemented wirelessly, such as in a distributed system.

Features which are described herein above and below in conjunction with different aspects or embodiments may also apply for other aspects and embodiments. Particularly, features described with respect to the method may apply for the vehicle media program processing system and vice versa analogously.

Further features and advantages of the subject matter of this disclosure will become apparent from the following description of exemplary embodiments in conjunction with the Figures, in which:
- Fig. 1: shows a schematic of a vehicle media program processing system and further components according to an exemplary embodiment.
- Fig. 2: shows schematically another embodiment of an input unit of the vehicle media program processing system and a corresponding connection to a processing device.
- Fig. 3A: shows schematically at least parts of a preference order of media contents.
- Fig. 3B: shows schematically at least parts of a media program to be executed by the vehicle media program processing system for reproduction.

Like elements, elements of the same kind and identically acting elements may be provided with the same reference numerals in the figures. Additionally, the figures may be not true to scale. Rather, certain features may be depicted in an exaggerated fashion for better illustration of important principles.

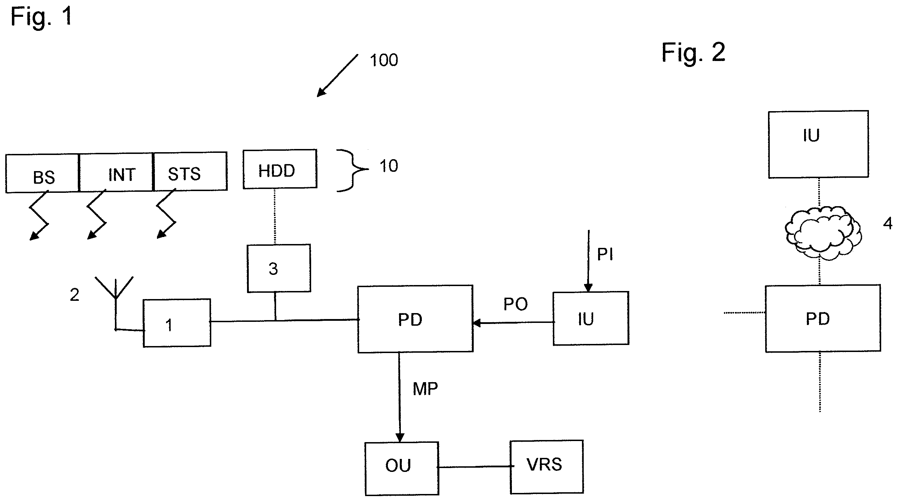

Fig. 1 shows a vehicle media program processing system 100 according to an exemplary embodiment of the invention in a schematic block diagram. The vehicle media program processing system may be configured for processing audio media, for example. The vehicle media program processing system 100 is preferably an automotive system which may be installed in a vehicle, e. g., in a head unit thereof (not shown).

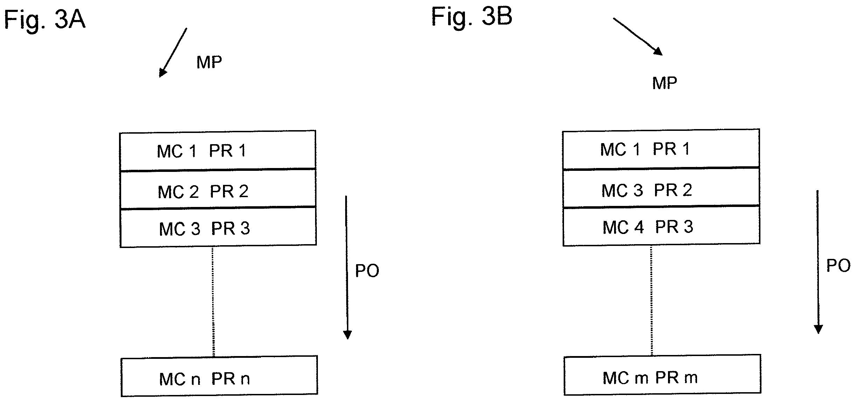

The vehicle media program processing system 100 is preferably configured to provide a media program MP (c f. Figs 3A and 3B) to a vehicle reproduction system VRS. By means of the vehicle media program processing system 100, a method of providing a media program to the vehicle reproduction system VRS or a method of operating the vehicle media program processing system 100 is described. Said media program MP comprises at least two media contents MC (c f. below).

The vehicle media program processing system 100 may further comprise or be coupled to a receiver 1 as described in Fig. 1 which may be a conventional receiving device known in the art. The receiver 1 may be configured to receive a signal from a media source 10, such as a broadcasting service BS for the media program MP. To this effect, the receiver may expediently comprise an antenna 2 for receiving the mentioned signal. The receiver 1 may further comprise a demodulator and a circuitry (both not explicitly indicated), for preparing it for playback or reproduction through a speaker (not shown) of the vehicle reproduction system VRS. Particularly, the mentioned demodulator can demodulate the received broadcast or broadcasting signal by a frequency determined by the station or frequency that is being tuned to. The demodulator can be analog, digital, or a combination of the two.

The receiver 1 may additionally or alternatively be embodied and configured to receive signals and/or services from the Internet INT as media source 10, such as from audio and/or video sharing websites, for example. Such signals are herein generally indicated with INT. Additionally, streaming services STS, such as "Spotify", may - as a media source 10 as shown in Fig. 1 - be further accessible via Internet and/or any other telecommunications network and/or a vehicle communications network bus, like the CAN-bus.

The vehicle media program processing system 100 as described herein may further comprise or be coupled to a hard disc drive (HDD) as media source 10 which may be coupled to the vehicle or, preferably, be implemented therein, e. g. in a vehicle reproduction system or any other unit.

Although not being explicitly indicated, the vehicle media program processing system 100 may be coupled to or comprise further media sources, e. g. apart from the ones described herein, such as media connected or connectible to the vehicle media program processing system 100 via USB, or optical storage devices. The hard disc drive may be coupled to the processing device PD by a (further) circuitry or audio circuitry indicated with numeral 3 in Figure 1 for coupling the HDD to the processing device PD.

The vehicle media program processing system 100 comprises a processing device PD, e. g. a microprocessor forming a DSP (digital sound processor). The processing device PD is configured to be coupled to the receiver 1, for instance. The processing device is further configured to receive data associated with a preference order PO, preferably a preference order defined by a user of the vehicle media program processing system 100 or a driver of the vehicle in which the vehicle media program processing system 100 may be implemented. The preference order is, preferably, provided for the media program MP to be reproduced in the vehicle reproduction system VRS. Expediently, the media program MP comprises at least two, expediently a variety of different media contents MC. The media contents can be of any type or category, e. g. a piece of music or non-musical contributions such as news from the radio, podcasts or any other audio contributions.

The processing device PD is further configured to process the media program MP according to the preference order PO and - thereby - to evaluate whether a preferential media content MC, i. e. a media content having preference 1 (c f. PR1 in Figure 3A) of the at least two media contents is available, wherein, if the preferential media content MC is available, the preferential media content MC is executed as part of the media program MP and e. g. transmitted to the vehicle reproduction system VRS via an output unit ou (see below). If the preferential media content MC is not available, e. g. due to disturbance in broadcasting reception, the preference order PO of the at least two media contents MC is updated and the processing is repeated with a media content subordinate - in this case second preference or priority - to the preferential media content MC (see Figs. 3A and 3B).

The processing device PD may be implemented in the vehicle, e. g. in a portion of a head unit with appropriate memory capabilities, or may be a distributed system with parts thereof installed in the vehicle and other parts thereof provided on a remote server computer and accessible via a network, such as the Internet or any other telecommunication network.

The processing device PD may be implemented in the vehicle, e. g. by comprising one or more microprocessors, for example installed in the head unit (not shown). The vehicle media program processing system 100 may further comprise or be coupled or coupleable to an input unit IU (c f. Figures 1 and 2). The input unit IU is configured to receive a preference instruction PI for the media program MP and to establish the preference order PO out of the preference instruction PI. To this effect, the input unit IU is expediently configured to be coupled to the processing device PD. Via the input unit IU, the user of the vehicle media program processing system 100 or the driver of the respective vehicle can enter and/or edit the preference instruction PI which is then established to the preference order PO.

The input unit IU may exhibit a pre-processing unit or subunit. The pre-processing may relate to the establishing of the preference order PO.

As it may be necessary to access the preference instruction PI by the input unit IU and/or the processing device PD, the input unit IU and/or the processing device PD may comprise a database (not explicitly shown), wherein the information of the preference instruction PI can be stored, and wherein said one or more microprocessors of the processing device may have access to the database stored in a memory (e. g., located in the vehicle or on a remote server computer) which are part of the processing device PD.

According to the present invention, the preference instruction PI expediently comprises information about media sources used for the media program, such as radio, a HDD, a music streaming service and/or a contribution from the Internet. Further, the preference instruction PI expediently comprises information about sub-classes or sub-sources such as different radio stations, within one media source, the user may desire to listen to during the reproduction of the specific media program MP. For example, the user of the vehicle media program processing system 100 may wish to listen to a specific radio station, such as the German radio "SWR3".

Alternatively, the preference instruction PI may comprise information about media genres used for the media program, such as e. g. audio or music genres like "rock/pop/alternative" from the media sources: BS, STS and HDD.

To this effect, the processing device PD may be configured to, e. g. autonomously, look for the respective media contents of the desired genre among the available media sources 10. In this regard, (available) media contents which are not affected by the preference instruction or the corresponding information, are executed in a shuffle or arbitrary mode by the processing device PD without the need of further driver instruction. This can particularly be achieved by state of the art means. Thus, as an advantage, the driver of the related vehicle is not distracted from his driving task and driving safety is preserved.

Moreover, the preference instruction PI may comprise information about an Internet source or contribution, such as a podcast, e. g. the instruction to desire that podcast content to be reproduced only if a corresponding new episode thereof or - alternatively - updated news are available. Regardless of the actual availability, the preference order PO may be established, wherein the availability is checked later by the processing device PD in a real-time fashion during or shortly prior to execution and/or reproduction of the media program MP.

Furthermore, the preference instruction PI may comprise information about or to define the time at which a specific media source or media genre is desired to be executed, e. g. in average, by the vehicle media program processing system 100.

In an embodiment, the input unit IU is implemented as an on-board unit, e. g. in an infotainment and/or human-machine-interface (HMI) device of a vehicle, such as a head unit, comprising the vehicle reproduction system VRS, for example.

In another embodiment as shown in Fig. 2, the input unit IU is implemented at least partly as an off-board unit, particularly in a remote terminal, via a network 4, web portal or web server. The mentioned remote terminal may be a laptop, smart phone or any other device capable of being connected to the network 4. Said web portal may, in turn, require user registration and/or a user account. The mentioned network may be the Internet and/or any other telecommunications network and/or a vehicle communications network bus, like the CAN-bus. To this end, the input unit IU, which may be installed in or outside of a vehicle, may use any known wired, wireless or distributed technology for communication with the processing device PD either directly or over the network 4.

In Fig. 3A, a schematic of a preference order PO according to an embodiment is indicated. This example may, for instance, correspond to a media program the user wishes to execute on a normal working day between 07:30 and 08:00 a.m.. The preference order PO comprises information on a first media content MC1 provided with preference PR1. Media content MC1 may be e. g. news from a broadcasting service, such as SWR3 or corresponding media source. The preference order PO further comprises information on a second media content MC2 with preference PR2. Media content MC2 may - according to the preference instruction - be any updated podcast or further news contribution, wherein availability has not yet been checked by the processing device PD. The second media content MC2 is subordinate to the first media content MC1. The preference order PO further comprises information on a third media content MC3 with preference PR3 which is, in turn, subordinate to media content MC2. Media content MC3 may be e. g. music from a broadcasting service or corresponding media source. At the end of the preference order PO, a media content MCn is indicated with an according preference, i. e. PR n.

After the establishing of the preference order PO for the media program MP as shown in Fig. 3A, the media program is processed (see Fig. 3B). As described above, if the preferential media content MC is available, the preferential media content MC is executed and, if not, the preference order PO is updated and the processing is repeated with a media content subordinate to the preferential media content MC (or media content of preference PR1).

This is indicated in Fig. 3B, for example, wherein media content MC1 has been found to be available by the processing device PD, and thus media content MC1 has been executed as a first media content of the media program MP. Thus, the media program MP commences with the first media content MC1. As, in the indicated example, the processing has found that media content MC2 with preference PR2 is not available, e. g. as the above-mentioned updated or new podcast is not yet available or a required Internet connection cannot be established, media content MC2 is not processed or included in the media program MP. Consequently, only the subordinate media content MC3 with updated priority PR2 is processed next in the media program MP as MC3 has been found available.

In this way, the preference order PO is updated in or for the media program MP, depending on the availability of the respective media content MC and, as well, on the preference instructions as described above. The media program MP may then be executed dynamically or in real-time, wherein, e. g. during the reproduction of the first media content MC1 already the availability of that media content of the next (subordinate) preference in the preference order PO is checked by the processing device PD. This may be achieved by state of the art means.

For example, within the described method, the processing may - in accordance with the preference instruction PI - be performed or the processing device PD may be configured such that media contents MC, which are to be reproduced directly after one another in the media program MP, have different categories chosen from at least one of music and non-musical contributions. The term "in accordance with the preference instruction PI" shall in this regard mean that the preference instruction PI dictates e. g. the execution of a non-musical media content, directly after a media content of musical category has been executed, i. e. rendered or recorded in or for the media program MP. In this regard, availability of a media content of musical category is expediently denied by the processing device PD. In this regard, the processing may - in accordance with the preference instruction PI - further be performed such that between media content of non-musical categories which are to be reproduced successively, at least a pre-set period of time, e. g. 30 minutes, 10 minutes, 15 minutes or, preferably, 20 minutes of a media content of musical category is executed or reproduced.

In accordance with the preference instruction PI, the processing may be performed such that availability of a media content MC is denied by the processing device PD when that media content, e. g. of a broadcasting service BS, can not be reproduced from its beginning, as a whole or without interruption, as the processing of the media program MP has e. g. only been started after the point of time of the beginning or commencement of the respective media content. This may, particularly be the case, when the above-mentioned driver or user e. g. starts his journey and therewith the desired media program only when e. g. the news of 8 a.m. are already running. In this regard, the user may wish to switch to another media content and refuse the one of the news.

In accordance with the preference instruction PI, the processing may further be performed such that availability of a media content MC is denied by the processing device PD when a media content MC, e. g. of a broadcasting service BS, cannot be reproduced until its end, as a whole or without interruption as the processing of the media program MP is stopped at a point of time prior to the end of the respective media content MC. This may, particularly be the case, when the above-mentioned driver or user normally or probably stops his journey and therewith the desired media program e. g. already during the evening news. To this effect, a time frame may be provided to the processing device PD via a corresponding preference instruction. In the present case, the user may or may have desired to abstain from the execution and/or reproduction of the respective media content prior to the end of his journey.

The vehicle media program processing system 100 further comprises an output unit OU (c f. Fig. 1). The output unit OU is, preferably, configured to receive data from the processing device PD and configured to couple output data (such as audio signals) to a vehicle reproduction system VRS to reproduce the media program MP. After or during the processing of the media program MP, the media program MP or each of the single media contents MC are transmitted to the output unit OU for the reproduction of the media program or each of the media contents, respectively.

The vehicle reproduction system VRS expediently comprises speaker and any necessary amplifiers in order to reproduce the media program MP via the vehicle reproduction system VRS (not shown).

As described above, the presented method and system can, advantageously, be used to generate various user-defined media programs which are customized to the user's requests. Even various different media programs, e. g. for the morning journey to work and for the evening journey to home, can be processed or generated based on date and time so that the vehicle infotainment is different at morning and evening or on workdays and weekends.

For example, the user can determine via the preference instruction to execute and playback a first media source on every weekday from 09:00 am to 09:30 am and a second media source from 09:30 a.m. to 10:00 a.m..

The present disclosure further relates to a vehicle, such as a car, comprising the vehicle media program processing system and/or the vehicle reproduction system.

Preferably, the media program is related to audio contents only. Alternatively, other media contents, e. g. video contents can be subject to the described system and method.

It will be understood that, as used herein, the expression "coupled to" can be used to define either a direct or an indirect connection between the respective elements. The scope of protection of the invention is not limited to the examples given herein above.

## Claims

1. Method of providing a media program (MP) to a vehicle reproduction system (VRS) comprising the steps of:
- providing a preference instruction (PI) for the media program (MP) to a processing device (PD), wherein the media program (MP) comprises at least two media contents (MC) to be processed by the processing device (PD), and the preference instruction (PI) comprises information to define a date and time at which a specific media source or media genre is desired to be executed,
- establishing a preference order (PO) of the at least two media contents (MC) out of the preference instruction (PI),
- processing the media program (MP) according to the preference order (PO), wherein the processing device (PD) evaluates whether a preferential media content (MC) of the at least two media contents (MC) is available and:
- if the preferential media content (MC) is available, executing the preferential media content (MC) as part of the media program (MP), and
- if the preferential media content (MC) is not available, updating the preference order (PO) of the at least two media contents (MC) and repeating the processing with a media content (MC) subordinate to the preferential media content (MC), wherein the preference order (PO) is updated for the media program (MP) depending on the availability of the respective media content (MC) and on the preference instruction (PI), and the media program (MP) is executed dynamically, wherein during the reproduction of the preferential media content (MC) the availability of the media content (MC) of a subordinate preference in the preference order (PO) is checked by the processing device (PD), such that availability of that media content (MC) is denied by the processing device (PD) when that media content (MC) cannot be reproduced until its end.

2. Method according to claim 1, wherein available media contents (MC) which are not affected by the preference instruction (PI) are executed in a shuffle or arbitrary mode by the processing device (PD).

3. Method according to claim 1 or 2, wherein the preference instruction (PI) is user-defined, and wherein the preference instruction (PI) comprises information about media sources (10) used for the at least two media contents (MC).

4. Method according to claim 3, wherein at least one of the media sources (10) is selected from at least one of: a broadcasting service (BS), a HDD media (HDD), streaming service (STS) and the Internet (INT).

5. Method according to claim 3 or 4, wherein the preference instruction (PI) comprises information about sub-classes, such as different radio stations, within one media source.

6. Method according to at least one of the previous claims, wherein, in accordance with the preference instruction (PI), the processing is performed such that, as a preferential media content (MC), news from a broadcasting service (BS) are executed and, as a first subordinate media content (MC), a podcast from the Internet (INT) is executed and, as a second subordinate media content (MC), music from a broadcasting service (BS) is executed.

7. Method according to at least one of the previous claims, wherein, in accordance with the preference instruction (PI), the processing is performed such that media contents (MC) which are to be reproduced directly after one another in the media program (MP) have different categories chosen from at least one of: music and non-musical contributions.

8. Method according to claim 7, wherein, in accordance with the preference instruction (PI), the processing is performed such that between media contents (MC) of non-musical categories which are to be reproduced successively, at least a pre-set period of time of a media content (MC) of musical category is executed.

9. A vehicle media program processing system (100) comprising:
- a processing device (PD) being configured to receive a preference instruction (PI) for a media program (MP) to be reproduced in a vehicle reproduction system (VRS), wherein the media program (MP) comprises at least two media contents (MC) and the preference instruction (PI) comprises information to define a date and time at which a specific media source or media genre is desired to be executed,
- wherein the processing device (PD) is configured to establish a preference order (PO) of the at least two media contents (MC) out of the preference instruction (PI) and to process the media program (MP) according to the preference order (PO) and to evaluate whether a preferential media content (MC) of the at least two media contents (MC) is available, wherein, if the preferential media content (MC) is available, the preferential media content (MC) is executed as part of the media program (MP), and, if the preferential media content (MC) is not available, the preference order (PO) of the at least two media contents (MC) is updated and the processing is repeated with a media content (MC) subordinate to the preferential media content (MC), wherein the preference order (PO) is updated for the media program (MP) depending on the availability of the respective media content (MC) and on the preference instruction (PI), and the media program (MP) is executed dynamically, wherein during the reproduction of the preferential media content (MC) the availability of the media content (MC) of a subordinate preference in the preference order (PO) is checked by the processing device (PD), such that availability of that media content (MC) is denied by the processing device (PD) when that media content (MC) cannot be reproduced until its end, and
- an output unit (OU) being configured to receive data from the processing device (PD) and to couple output data to a vehicle reproduction system (VRS) to reproduce the media program (MP).

10. Vehicle media program processing system (100) according to claim 9, further comprising an input unit (IU) being configured to receive a preference instruction (PI) of the at least two media contents (MC) and to establish the preference order (PO) out of the preference instruction (PI).

11. Vehicle media program processing system (100) according to claim 10, wherein the input unit (IU) is implemented as on-board unit, e. g. in an infotainment and/or HMI- device, of a vehicle comprising the vehicle reproduction system (VRS).

12. Vehicle media program processing system (100) according to claim 10, wherein the input unit (IU) is implemented as an off-board unit, particularly in a remote terminal, via a web portal or web server.

13. Vehicle comprising the vehicle media program processing system (100) according to at least one of claims 9 to 12.

## Patentansprüche

1. Verfahren zur Bereitstellung eines Medienprogramms (MP) an ein Fahrzeugwiedergabesystem (VRS), das folgende Schritte aufweist:
- Bereitstellen einer Präferenzanweisung (PI) für das Medienprogramm (MP) an eine Verarbeitungsvorrichtung (PD), wobei das Medienprogramm (MP) mindestens zwei Medieninhalte (MC) aufweist, die von der Verarbeitungsvorrichtung (PD) zu verarbeiten sind, und die Präferenzanweisung (Pi) Information aufweist, um ein Datum und eine Zeit zu definieren, zu dem/der eine bestimmte Medienquelle oder ein spezielles Mediengenre ausgeführt werden soll,
- Erstellen einer Präferenzreihenfolge (PO) der mindestens zwei Medieninhalte (MC) aus der Präferenzanweisung (PI),
- Verarbeiten des Medienprogramms (MP) gemäß der Präferenzreihenfolge (PO), wobei die Verarbeitungsvorrichtung (PD) auswertet, ob ein bevorzugter Medieninhalt (MC) der mindestens zwei Medieninhalte (MC) verfügbar ist, und:
- wenn der bevorzugte Medieninhalt (MC) verfügbar ist, Ausführen des bevorzugten Medieninhalts (MC) als Teil des Medienprogramms (MP) und
- wenn der bevorzugte Medieninhalt (MC) nicht verfügbar ist, Aktualisieren der Präferenzreihenfolge (PO) der mindestens zwei Medieninhalte (MC) und Wiederholen der Verarbeitung mit einem dem bevorzugten Medieninhalt (MC) untergeordneten Medieninhalt (MC), wobei die Präferenzreihenfolge (PO) für das Medienprogramm (MP) in Abhängigkeit von der Verfügbarkeit des jeweiligen Medieninhalts (MC) und der Präferenzanweisung (PI) aktualisiert wird und das Medienprogramm (MP) dynamisch ausgeführt wird, wobei während der Wiedergabe des bevorzugten Medieninhalts (MC) die Verfügbarkeit des Medieninhalts (MC) mit einer untergeordneten Präferenz in der Präferenzreihenfolge (PO) von der Verarbeitungsvorrichtung (PD) überprüft wird, so dass die Verfügbarkeit dieses Medieninhalts (MC) von der Verarbeitungsvorrichtung (PD) verweigert wird, wenn dieser Medieninhalt (MC) nicht bis zu seinem Ende wiedergegeben werden kann.

2. Verfahren nach Anspruch 1, wobei verfügbare Medieninhalte (MC), die von der Präferenzanweisung (PI) nicht betroffen sind, von der Verarbeitungsvorrichtung (PD) in einem Zufallswiedergabemodus oder einem beliebigen Modus ausgeführt werden.

3. Verfahren nach Anspruch 1 oder 2, wobei die Präferenzanweisung (PI) benutzerdefiniert ist und wobei die Präferenzanweisung (PI) Information über Medienquellen (10) aufweist, die für die mindestens zwei Medieninhalte (MC) verwendet werden.

4. Verfahren nach Anspruch 3, wobei mindestens eine der Medienquellen (10) aus mindestens einem ausgewählt ist von: einem Rundfunkdienst (BS), einem HDD-Medium (HDD), einem Streaming-Dienst (STS) und dem Internet (INT).

5. Verfahren nach Anspruch 3 oder 4, wobei die Präferenzanweisung (PI) Information über Unterklassen, wie z.B. verschiedene Radiosender, innerhalb einer Medienquelle aufweist.

6. Verfahren nach mindestens einem der vorhergehenden Ansprüche, wobei gemäß der Präferenzanweisung (PI) die Verarbeitung so ausgeführt wird, dass als ein bevorzugter Medieninhalt (MC) Nachrichten von einem Rundfunkdienst (BS) ausgeführt werden und als ein erster untergeordneter Medieninhalt (MC) ein Podcast aus dem Internet (INT) ausgeführt wird und als ein zweiter untergeordneter Medieninhalt (MC) Musik von einem Rundfunkdienst (BS) ausgeführt wird.

7. Verfahren nach mindestens einem der vorhergehenden Ansprüche, wobei gemäß der Präferenzanweisung (PI) die Verarbeitung so ausgeführt wird, dass Medieninhalte (MC), die direkt nacheinander in dem Medienprogramm (MP) wiedergegeben werden, verschiedene Kategorien haben, die ausgewählt werden aus mindestens: Musik-Beiträgen und Nicht-Musik-Beiträgen.

8. Verfahren nach Anspruch 7, wobei gemäß der Präferenzanweisung (PI) die Verarbeitung so ausgeführt wird, dass zwischen Medieninhalten (MC) von Nicht-Musik-Kategorien, die nacheinander wiederzugeben sind, mindestens eine vorgegebene Zeitspanne ein Medieninhalt (MC) der Musik-Kategorie ausgeführt wird.

9. Fahrzeug-Medienprogrammverarbeitungssystem (100), das aufweist:
- eine Verarbeitungsvorrichtung (PD), die dazu ausgelegt ist, eine Präferenzanweisung (PI) für ein in einem Fahrzeugwiedergabesystem (VRS) wiederzugebendes Medienprogramm (MP) zu empfangen, wobei das Medienprogramm (MP) mindestens zwei Medieninhalte (MC) aufweist und die Präferenzanweisung (PI) Information aufweist, um ein Datum und eine Zeit zu definieren, zu dem/der eine spezielle Medienquelle oder ein spezielles Mediengenre ausgeführt werden soll,
- wobei die Verarbeitungsvorrichtung (PD) dazu ausgelegt ist, eine Präferenzreihenfolge (PO) der mindestens zwei Medieninhalte (MC) aus der Präferenzanweisung (PI) zu erstellen und das Medienprogramm (MP) gemäß der Präferenzreihenfolge (PO) zu verarbeiten und auszuwerten, ob ein bevorzugter Medieninhalt (MC) der mindestens zwei Medieninhalte (MC) verfügbar ist, wobei, wenn der bevorzugte Medieninhalt (MC) verfügbar ist, der bevorzugte Medieninhalt (MC) als Teil des Medienprogramms (MP) ausgeführt wird, und, wenn der bevorzugte Medieninhalt (MC) nicht verfügbar ist, die Präferenzreihenfolge (PO) der mindestens zwei Medieninhalte (MC) aktualisiert wird und die Verarbeitung mit einem dem bevorzugten Medieninhalt (MC) untergeordneten Medieninhalt (MC) wiederholt wird, wobei die Präferenzreihenfolge (PO) für das Medienprogramm (MP) in Abhängigkeit von der Verfügbarkeit des jeweiligen Medieninhalts (MC) und der Präferenzanweisung (PI) aktualisiert wird, und das Medienprogramm (MP) dynamisch ausgeführt wird, wobei während der Wiedergabe des bevorzugten Medieninhalts (MC) die Verfügbarkeit des Medieninhalts (MC) mit einer untergeordneten Präferenz in der Präferenzreihenfolge (PO) von der Verarbeitungsvorrichtung (PD) überprüft wird, so dass die Verfügbarkeit dieses Medieninhalts (MC) von der Verarbeitungsvorrichtung (PD) verweigert wird, wenn dieser Medieninhalt (MC) nicht bis zu seinem Ende wiedergegeben werden kann, und
- eine Ausgabeeinheit (OU), die dazu ausgelegt ist, Daten von der Verarbeitungsvorrichtung (PD) zu empfangen und die ausgegebenen Daten mit einem Fahrzeugwiedergabesystem (VRS) zur Wiedergabe des Medienprogramms (MP) zu koppeln.

10. Fahrzeug-Medienprogrammverarbeitungssystem (100) nach Anspruch 9, das ferner eine Eingabeeinheit (IU) aufweist, die dazu ausgelegt ist, eine Präferenzanweisung (PI) der mindestens zwei Medieninhalte (MC) zu empfangen und die Präferenzreihenfolge (PO) aus der Präferenzanweisung (PI) zu erstellen.

11. Fahrzeug-Medienprogrammverarbeitungssystem (100) nach Anspruch 10, wobei die Eingabeeinheit (IU) als eine fahrzeuginterne Einheit, z. B. in einer Infotainment- und/oder HMI-Vorrichtung, eines Fahrzeugs umgesetzt ist, das das Fahrzeug-Wiedergabesystem (VRS) aufweist.

12. Fahrzeug-Medienprogrammverarbeitungssystem (100) nach Anspruch 10, wobei die Eingabeeinheit (IU) als eine fahrzeugexterne Einheit, insbesondere in einem entfernten Endgerät, über ein Web-Portal oder einen Web-Server umgesetzt ist.

13. Fahrzeug, das das Fahrzeug-Medienprogrammverarbeitungssystem (100) nach mindestens einem der Ansprüche 9 bis 12 aufweist.

## Revendications

1. Procédé pour procurer un programme multimédia (MP) à un système de reproduction pour véhicule (VRS) comprenant les étapes consistant à :
- procurer une instruction préférentielle (PI) pour le programme multimédia (MP) à un système de traitement (PD) ; dans lequel le programme multimédia (MP) comprend au moins deux contenus multimédias (MC) qui doivent être traités par le dispositif de traitement (PD), et l'instruction préférentielle (PI) comprend des informations destinées à définir une date et une heure auxquels on souhaite exécuter un genre multimédia ou une source multimédia spécifique ;
- établir un ordre de préférence (PO) concernant lesdits au moins deux contenus multimédias (MC) à partir de l'instruction préférentielle (PI) ;
- traiter le programme multimédia (MP) en fonction de l'ordre de préférence (PO) ; dans lequel le dispositif de traitement (PD) évalue le fait de savoir si un contenu multimédia préférentiel (MC) parmi lesdits au moins deux contenus multimédias (MC) est disponible ; et
- lorsque le contenu multimédia préférentiel (MC) est disponible, exécuter le contenu multimédia préférentiel (MC) en tant que partie du programme multimédia (MP) ; et
- lorsque le contenu multimédia préférentiel (MC) n'est pas disponible, mettre à jour l'ordre de préférence (PO) concernant lesdits au moins deux contenus multimédias (MC) et répéter le traitement avec un contenu multimédia (MC) subordonné au contenu multimédia préférentiel (MC) ; dans lequel l'ordre de préférence (PO) est mis à jour pour le programme multimédia (MP) en fonction de la disponibilité du contenu multimédia respectif (MC) et en fonction de l'instruction préférentielle (PI), et le programme multimédia (MP) est exécuté d'une manière dynamique ; dans lequel, au cours de la reproduction du contenu multimédia préférentiel (MC), la disponibilité du contenu multimédia (MC) correspondant à une préférence subordonnée dans l'ordre de préférence (PO) est vérifiée par le dispositif de traitement (PD), d'une manière telle que la disponibilité dudit contenu multimédia (MC) est contestée par le dispositif de traitement (PD) lorsque ce contenu multimédia (MC) ne peut pas être reproduit jusqu'à son terme.

2. Procédé selon la revendication 1, dans lequel des contenus multimédias disponibles (MC) qui ne sont pas affectés par l'instruction préférentielle (PI) sont exécutés dans un mode arbitraire ou de lecture aléatoire par le dispositif de traitement (PD).

3. Procédé selon la revendication 1 ou 2, dans lequel l'instruction préférentielle (PI) est définie par un utilisateur ; et dans lequel l'instruction préférentielle (PI) comprend des informations concernant des sources multimédias (10) utilisées pour lesdits au moins deux contenus multimédias (MC).

4. Procédé selon la revendication 3, dans lequel au moins une des sources multimédias (10) représente au moins une source qui est choisie parmi : un service de radiodiffusion (BS), un média sur disque dur (HDD), un service de diffusion en continu (STS) et l'Internet (INT).

5. Procédé selon la revendication 3 ou 4, dans lequel l'instruction préférentielle (PI) comprend des informations concernant des sous-classes, telles que différentes stations radios, au sein d'une seule et même source multimédia.

6. Procédé selon au moins une des revendications précédentes, dans lequel, conformément à l'instruction préférentielle (PI), le traitement est mis en oeuvre d'une manière telle que, à titre de contenu multimédia préférentiel (MC), des nouvelles émises par un service de radiodiffusion (MC) sont exécutées et, à titre d'un premier contenu multimédia subordonné (MC), un fichier Balado à partir de l'Internet (INT) est exécuté et, à titre d'un second contenu multimédia subordonné (MC), de la musique émise par un service de radiodiffusion (BS) est exécutée.

7. Procédé selon au moins une des revendications précédentes, dans lequel, conformément à l'instruction préférentielle (PI), le traitement est mis en oeuvre d'une manière telle que des contenus multimédias (MC) qui doivent être reproduits de manière directe l'un après l'autre dans le programme multimédia (MP) possèdent différentes catégories qui sont sélectionnées à partir d'au moins un élément choisi parmi : des apports musicaux et non musicaux.

8. Procédé selon la revendication 7, dans lequel, conformément à l'instruction préférentielle (PI), le traitement est mis en oeuvre d'une manière telle qu'entre des contenus multimédias (MC) de catégories non musicales qui doivent être reproduits de manière successive, au moins un laps de temps préétabli d'un contenu multimédia (MC) de catégorie musicale est exécuté.

9. Système de traitement d'un programme multimédia pour véhicule (100), comprenant :
- un dispositif de traitement (PD) qui est configuré pour recevoir une instruction préférentielle (PI) pour un programme multimédia (MP) qui doit être reproduit dans un système de reproduction pour véhicule (VRS) ; dans lequel le programme multimédia (MP) comprend au moins deux contenus multimédias (MC) et l'instruction préférentielle (PI) comprend des informations destinées à définir une date et une heure auxquels on souhaite exécuter un genre multimédia ou une source multimédia spécifique ;
- dans lequel le dispositif de traitement (PD) est configuré pour établir un ordre de préférence (PO) concernant lesdits au moins deux contenus multimédias (MC) à partir de l'instruction préférentielle (PI) et pour traiter le programme multimédia (MP) en fonction de l'ordre de préférence (PO) et pour évaluer le fait de savoir si un contenu multimédia préférentiel (MC) parmi lesdits au moins deux contenus multimédias (MC) est disponible ; dans lequel, lorsque le contenu multimédia préférentiel (MC) est disponible, le contenu multimédia préférentiel (MC) est exécuté en tant que partie du programme multimédia (MP) ; et lorsque le contenu multimédia préférentiel (MC) n'est pas disponible, l'ordre de préférence (PO) concernant lesdits au moins deux contenus multimédias (MC) est mis à jour et le traitement est répété avec un contenu multimédia (MC) subordonné au contenu multimédia préférentiel (MC) ; dans lequel l'ordre de préférence (PO) est mis à jour pour le programme multimédia (MP) en fonction de la disponibilité du contenu multimédia respectif (MC) et en fonction de l'instruction préférentielle (PI), et le programme multimédia (MP) est exécuté d'une manière dynamique ; dans lequel, au cours de la reproduction du contenu multimédia préférentiel (MC), la disponibilité du contenu multimédia (MC) correspondant à une préférence subordonnée dans l'ordre de préférence (PO) est vérifiée par le dispositif de traitement (PD), d'une manière telle que la disponibilité dudit contenu multimédia (MC) est contestée par le dispositif de traitement (PD) lorsque ce contenu multimédia (MC) ne peut pas être reproduit jusqu'à son terme ; et
- une unité de sortie (OU) qui est configurée pour recevoir des données à partir du dispositif de traitement (PD) et pour coupler des données de sortie à un système de reproduction pour véhicule (VRS) afin de reproduire le programme multimédia (MP).

10. Système de traitement d'un programme multimédia pour véhicule (100) selon la revendication 9, comprenant en outre une unité d'entrée (IU) qui est configurée pour recevoir une instruction préférentielle (PI) concernant lesdits au moins deux contenus multimédias (MC) et pour établir un ordre de préférence (PO) à partir de l'instruction préférentielle (PI).

11. Système de traitement d'un programme multimédia pour véhicule (100) selon la revendication 10, dans lequel l'unité d'entrée (IU) est réalisée sous la forme d'une unité embarquée, par exemple dans un dispositif d'information-divertissement et/ou dans un dispositif HMI d'un véhicule comprenant le système de reproduction pour véhicule (VRS).

12. Système de traitement d'un programme multimédia pour véhicule (100) selon la revendication 10, dans lequel l'unité d'entrée (IU) est réalisée sous la forme d'une unité à l'extérieur du véhicule, en particulier dans un terminal à distance, via un portail Web ou un serveur Web.

13. Véhicule comprenant le système de traitement d'un programme multimédia pour véhicule (100) selon au moins une des revendications 9 à 12.
